# FASCICULE DE BREVET EUROPEEN

(11) **EP 2 498 741 B1**
(45) Date de publication et mention de la délivrance du brevet: **26.03.2014**
(21) Numéro de dépôt: 10798166.4
(22) Date de dépôt: 08.11.2010
(51) Int. Cl.: A61G 5/02, A61G 5/10

(54) **VEHICULE MONOBLOC**
EINTEILIGES FAHRZEUG
ONE-PIECE VEHICLE

(30) Priorité: 09.11.2009 FR 0905370
(43) Date de publication de la demande: 19.09.2012
(73) Titulaire: Salvan, Wally, 03200 Vichy (FR); Incubateur D'Entreprises D'Auvergne, 63360 Saint Beauzire (FR)
(72) Inventeur: SALVAN, Wally, F-03200 Vichy (FR)
(74) Mandataire: Myon, Gérard Jean-Pierre
(86) Numéro de dépôt international: PCT/FR2010/052394
(87) Numéro de publication internationale: WO 2011/055098

(56) Documents cités:
- EP-A2- 1 666 014
- WO-A1-88/03399
- WO-A1-2004/108046
- FR-A1- 2 556 587

## Description

Le secteur technique de la présente invention est celui des véhicules. La présente invention concerne notamment des véhicules utilisables par des personnes valides ou handicapées physiquement, par exemple pour des activités sportives ou de loisir.

Les fauteuils de loisir pour des personnes handicapées physiquement et se déplaçant, par exemple, en fauteuil roulant, sont des produits généralement complexes et onéreux. Des véhicules, comme par exemple des fauteuils roulants, de structure particulièrement adaptée à la pratique d'un sport tel que le basket ou le rugby ou le tennis ou un sport aquatique, sont en effet généralement réalisés avec une structure tubulaire métallique. De plus les véhicules utilisés pour des activités sportives ou de loisir sont généralement spécifiques à une activité en particulier. Le coût de fabrication relativement élevé de ces véhicules, limite naturellement leur usage aux personnes handicapées physiquement et très intéressées par une activité déterminée. Il existe ainsi un besoin de réduire le coût des véhicules utilisés par des personnes handicapées physiquement. Il existe d'autre part un besoin de développer et de faciliter l'accès tout public aux activités ou loisirs exercés dans un véhicule, pour des personnes étant ou n'étant pas handicapées physiques. Enfin il existe aussi un besoin d'adaptabilité des véhicules à plusieurs activités. EP 1 666 014 A2 divulgue un tel véhicule.

Le but de la présente invention est de pallier un ou plusieurs inconvénients de l'art antérieur en proposant un véhicule dont le coût de fabrication est réduit et ayant une structure facilitant son adaptation à plusieurs activités.

L'invention a donc pour objet un véhicule comprenant un siège pour un utilisateur tel que revendiqué, le siège comprenant un dossier, une assise et des rebords latéraux disposés de part et d'autre de l'assise, le siège, en plastique, étant réalisé d'un seul bloc, les rebords latéraux étant prolongés vers le bas de manière à former deux conduits arrière destinés à recevoir au moins un organe arrière de déplacement caractérisé en ce que le siège est creux.

Les conduits arrière sont par exemple disposés l'un en face de l'autre et ont par exemple chacun une extrémité de chaque côté de l'assise.

Avantageusement, de manière non limitative, des poches de gel ou des mousses d'amortissement, telles que les poches utilisées pour les selles de vélo, peuvent être collées sur les surfaces plastiques du siège pour améliorer son ergonomie et son confort. De manière non limitative, d'autres moyens de calage ou d'amortissement peuvent aussi être collés sur le siège. Avantageusement des sièges pourront être produits, par exemple en grande quantité, selon plusieurs tailles standardisées.

Selon une particularité, l'assise comprend une surface d'appui avant prolongée par une surface d'appui arrière disposée à un niveau inférieur par rapport à la surface d'appui avant, ces deux surfaces d'appui étant jointes aux rebords latéraux par des surfaces en arrondi, les rebords latéraux ayant une hauteur déterminée par rapport à une des surfaces d'appui de l'assise de façon à soutenir les muscles abducteurs des cuisses et les muscles grand fessier de l'utilisateur. Les surfaces d'appui avant et arrière de l'assise sont par exemple réalisées planes et jointes entre elles par un dénivellement arrondi. Le décalage de niveau entre les surfaces d'appui avant et arrière de l'assise est par exemple compris entre 0,5 cm et quelques centimètres. La hauteur des rebords latéraux disposés sur les côtés de l'assise, est par exemple comprise entre 3 cm et 20 cm. Bien entendu, ces valeurs sont indicatives et dépendent du diamètre des roues du véhicule. Les rebords latéraux sont par exemple en contact avec l'utilisateur jusqu'à mi-cuisse. Les muscles grand fessier sont d'autre part en appui avec une surface arrondie à l'arrière de l'assise.

Selon une particularité, l'assise est jointe à une partie basse du dossier, cette partie basse comprenant une surface en retrait par rapport à une surface d'appui d'une partie haute du dossier dont les angles sont arrondis pour le confort de l'utilisateur lors des rotations, la surface d'appui de la partie haute du dossier étant disposée de façon à soutenir la région lombaire, la surface en retrait de la partie basse étant disposée de façon à dégager les vertèbres lombaires et le sacrum de l'utilisateur. Le décalage entre la surface en retrait et la surface d'appui haute est par exemple de un à quelques centimètres.

Le siège comprend une plate-forme basse comprenant selon une particularité, deux conduits avant orientés vers le bas destinés à recevoir au moins un organe avant de déplacement, une cloison pare-chocs arrondie délimitant des côtés latéraux et avant de la plate-forme basse. Les conduits avant et arrière sont par exemple des conduits de section cylindrique et ouverts à leurs deux extrémités.

Selon une particularité, la plate-forme basse comprend un renfoncement formé par au moins un plancher de pose des pieds de l'utilisateur entouré entièrement par un rebord périphérique délimitant le renfoncement. Les pieds sont ainsi protégés et disposés à un emplacement précis dans le véhicule. Les conduits avant destinés à recevoir au moins un organe avant de déplacement, sont par exemple disposés de part et d'autre du renfoncement.

Selon une particularité, le rebord délimitant le renfoncement comprend une partie arrière prolongée par une cloison rejoignant un bord avant de l'assise, le bord avant de l'assise étant positionné en avant de la partie arrière du rebord délimitant le renfoncement. L'utilisateur a avantageusement une position d'utilisation du véhicule avec ses talons en arrière par rapport à ses genoux, ce qui facilite par exemple les mouvements pour se pencher en avant ou les efforts vers l'avant et vers le bas, réalisés avec les bras. Le décalage entre le bord avant de l'assise et l'arrière du rebord périphérique délimitant le renfoncement, est réalisé par exemple de quelques centimètres à quelques dizaines de centimètres.

Selon une particularité, le bord avant de l'assise comprend deux courbures vers l'arrière de positionnement des jambes de l'utilisateur, ces deux courbures vers l'arrière étant jointes par une partie médiane courbée vers l'avant, cette partie médiane comprenant de plus une partie saillante sur le dessus, cette partie saillante comprenant deux portions concaves arrondies d'appui des muscles adducteurs des cuisses de l'utilisateur.

Selon une particularité, le véhicule comprend des logements filetés borgnes noyés dans le siège, disposés latéralement par rapport à l'assise, ces logements filetés étant disposés de part et d'autre de l'arrière de l'assise et étant destinés à la fixation d'une ceinture ou d'une sangle de maintien de l'aine ou des muscles abdominaux de l'utilisateur ou ces logements étant disposés de part et d'autre de l'avant de l'assise et étant destinés à la fixation d'une ceinture ou d'une sangle de maintien des genoux de l'utilisateur.

A présent, les logements filetés borgnes sont noyés à l'extérieur de l'assise pour éviter tout frottement. Par ailleurs la ceinture peut être sous forme de harnais élastique pour les utilisateurs n'ayant plus la fonction de la ceinture abdominale. Le maintien en hauteur des genoux par rapport au bord avant de l'assise bloque avantageusement les pieds de l'utilisateur dans le renfoncement repose-pied et évite ainsi l'utilisation de sangles de pieds.,

Selon l'invention, les rebords latéraux en se prolongeant vers le bas de manière à former les deux conduits arrière, forment des surfaces latérales extérieures planes, le siège comprenant des oreilles s'étendant en hauteur et sur les côtés et réalisées sur la plate-forme basse et contre les surfaces latérales extérieures planes, les oreilles comprenant chacune un conduit pour accessoire orienté d'avant en arrière réalisé à un niveau déterminé de manière à ce que sa partie supérieure soit au niveau de la partie inférieure des conduits arrière. Les surfaces extérieures planes dans le prolongement des rebords latéraux permettent notamment de faciliter le stockage de sièges placés tête-bêche et en contact par leurs surfaces extérieures planes.

Les conduits dans les oreilles peuvent par exemple servir à l'insertion de deux barres de chaque côté du siège, dépassant à l'avant et à l'arrière du véhicule et s'appuyant sous une barre maintenue dans les conduits arrières. Ces deux barres de chaque côté du siège permettent par exemple de porter le véhicule selon le principe de la chaise à porteurs. De plus les oreilles peuvent avantageusement être équipées de logements filetés borgnes noyés dans le siège, par exemple pour l'installation d'organes de freinage coopérant avec des roues arrière.

Selon une particularité, l'organe arrière de déplacement comprend deux roues arrière et une barre maintenue dans les conduits arrière, cette barre étant équipée à chacune de ses extrémités, d'un organe de blocage de la barre en translation et d'articulation d'une des roues, les rebords latéraux disposés de chaque côté de l'assise ayant un profil supérieur suivant le contour d'une des roues sur une portion angulaire déterminée comprise, par exemple entre 15° et 75°, deux organes avant de déplacement comprenant chacun au moins une roue avant orientable.

Selon une particularité, les roues arrière comprennent chacune un anneau extérieur de roulement en plastique moulé, relié audit organe d'articulation par des ailettes d'appui sur l'eau se rétrécissant dans une partie de jonction avec l'anneau extérieure de roulement de façon à laisser un espace libre en vis-à-vis d'une main courante de cette roue, le siège comprenant sous l'assise un bossage dans lequel est réalisée une prise en creux ouverte vers l'avant et une poignée réalisée derrière le dossier, un flotteur de stabilisation du véhicule dans l'eau étant accroché à cette poignée et à la prise en creux. Une fois le véhicule hors de l'eau l'utilisateur peut par exemple rouler sur le sol. D'autre part la poignée non utilisée par le flotteur pourrait être utilisée comme moyen de préhension du siège par exemple par une personne qui n'est pas assise dans le véhicule.

Selon une particularité, le véhicule comprend deux organes de déplacement arrière comprenant chacun un ski de glissement sur la neige fixé, par une tige, à une portion cylindrique articulée dans un des conduits arrière, cette tige étant fixée d'autre part à une branche remontant au-dessus du siège et se terminant par une poignée d'orientation de ce ski arrière, deux organes de déplacement avant comprenant chacun au moins un ski avant de glissement sur la neige. Avantageusement ce type de véhicule peut être utilisé comme une luge ou comme un traîneau.

Selon une particularité, l'organe de déplacement arrière comprend deux skis de glissement sur l'eau, l'organe de déplacement avant comprenant au moins un ski avant de glissement sur l'eau, disposé de façon médiane sous le véhicule. Avantageusement ce type de véhicule peut être utilisé en étant tracté par un bateau à moteur ou par un cerf-volant tel qu'une aile utilisée pour le kitesurf.

Un autre objet de l'invention concerne un procédé de fabrication d'un véhicule selon l'invention caractérisé en ce que le siège est réalisé creux par rotomoulage.

Selon une particularité, une ou plusieurs parties de cloisons du siège sont utilisées pour un marquage en relief d'une inscription ou d'un dessin. Une marque, une immatriculation ou un identifiant sont par exemple inscrits dans la masse du siège, à l'arrière du dossier.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 représente une vue en perspective de l'avant d'un exemple de véhicule selon l'invention,
- la figure 2 représente une vue de côté du véhicule,
- la figure 3 représente une vue de face du véhicule,
- la figure 4 représente une vue de dessus du véhicule,
- la figure 5 représente une vue en perspective du dessous du véhicule,
- la figure 6 représente une vue en perspective d'une variante de réalisation du dessous du véhicule,
- la figure 7 représente une vue en perspective de l'avant d'un exemple de véhicule selon l'invention,
- la figure 8 représente une vue de côté du véhicule de la figure 7,
- la figure 9 représente une vue de dessus du véhicule de la figure 7,
- la figure 10 représente une vue de face du véhicule de la figure 7,
- la figure 11 représente une vue en perspective de l'arrière du véhicule de la figure 7,
- la figure 12 représente une vue de derrière du véhicule de la figure 7,
- la figure 13 représente une vue de derrière d'un exemple de véhicule selon l'invention,
- la figure 14 représente une vue en perspective d'un exemple de siège de véhicule selon l'invention,
- les figures 15 à 18 représentent des vues en perspective de véhicule selon l'invention fabriqué avec le siège de la figure 14,
- la figure 19 représente une vue de dessus montrant un exemple de stockage de deux sièges selon l'invention,
- la figure 20 représente une vue d'une autre réalisation du véhicule et
- les figures 21 et 22 sont des vues, respectivement, générale et de côté, à une autre échelle, d'un autre mode de réalisation du siège.

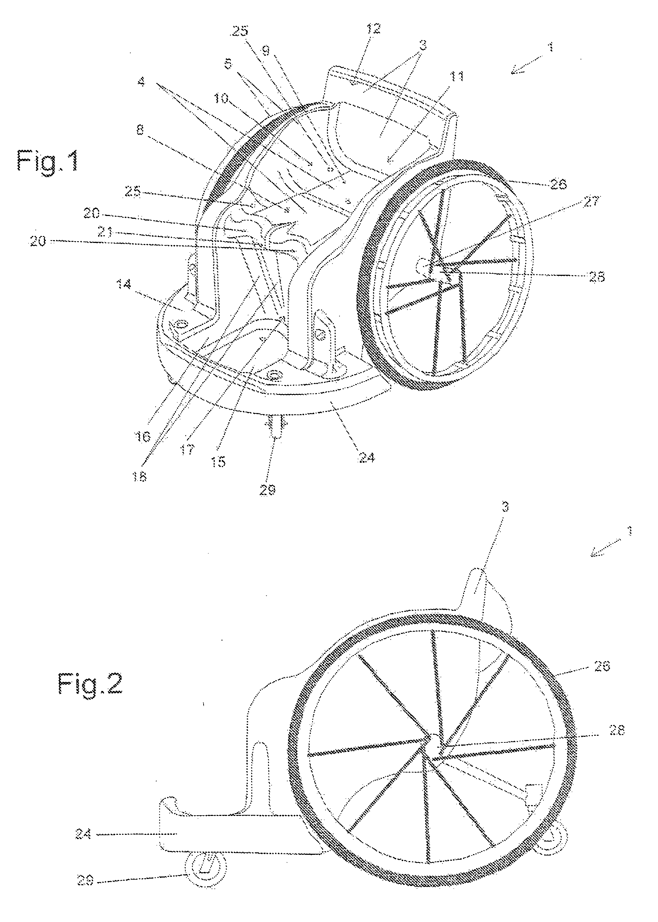

L'invention va à présent être décrite. Le véhicule 1, comme représenté à la figure 1, comprend un siège pour un utilisateur, le siège comprenant un dossier 3, une assise 4 et des rebords latéraux 5 disposés de part et d'autre de l'assise. Le dossier 3 peut recevoir, en variante, une rehausse réglable en hauteur améliorant le maintien de la personne. Le siège 2, en plastique, est réalisé d'un seul bloc, les rebords latéraux 5 étant prolongés vers le bas de manière à former deux conduits arrière 6 destinés à recevoir au moins un organe arrière de déplacement, référencé 26, 27 et 28 ou 34, 35 et 36 ou 58, 59 et 40. Les deux conduits arrière 6 destinés à recevoir au moins un organe arrière de déplacement, sont par exemple réalisés sous la forme d'ouvertures traversantes cylindriques.

Le siège moulé en plastique est creux et par exemple étanche pour être flottant. De plus le siège en plastique est facilement lavable ou désinfectable. Différentes couleurs ou aspects mat ou brillant sont par exemple réalisables.

Le siège est par exemple réalisé en séries de différentes mesures. Des tailles de sièges sont par exemple réalisées en fonction de différentes tailles de roues, soit en pouce 22', 24' et 26'.

Le siège 2 est réalisé creux par exemple par un procédé de type rotomoulage. Avec un tel procédé, on peut incorporer un dispositif de chauffage, par exemple une résistance électrique, dans le siège. Ainsi, en utilisant un polymère thermoformable, chaque utilisateur, en chauffant au préalable le siège grâce à la résistance électrique, prend une empreinte de son corps dans le siège et conforme ce dernier à sa morphologie. En d'autres termes, l'utilisation d'un dispositif de chauffage d'un polymère thermoformable permet de réaliser un siège adapté à chaque utilisateur.

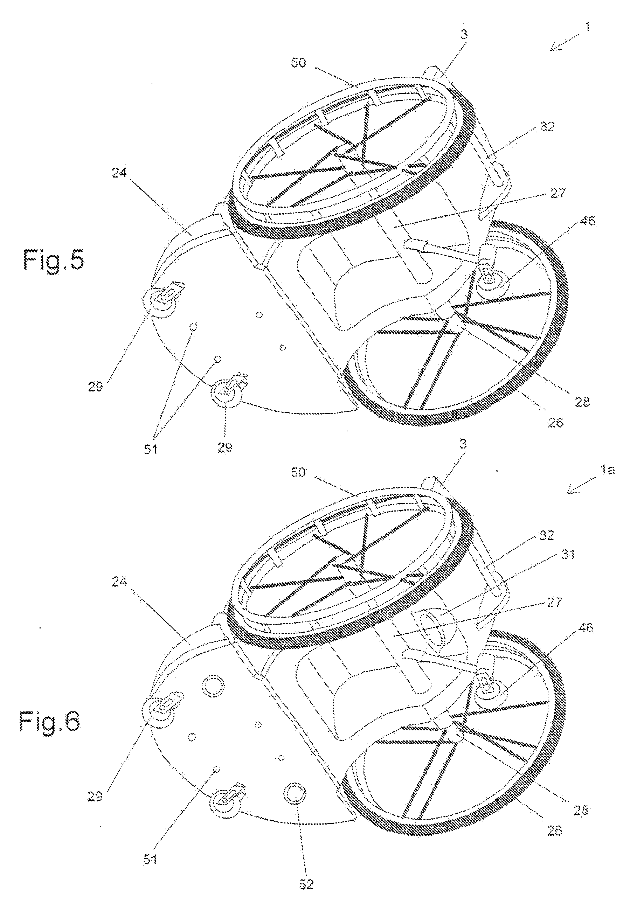

Un siège creux rempli d'air permet notamment d'alléger le siège, mais on pourrait aussi utiliser un siège plein en plastique ou un siège creux rempli d'une mousse de renfort ou d'une mousse améliorant la flottaison. Comme représenté à la figure 6, des bouchons 52 ferment par exemple des ouvertures réalisées dans la coque creuse formant le siège 2. Ces bouchons 52 peuvent par exemple être vissés autour d'un filetage d'une cloison inférieure du siège 2. En variante, en enlevant ces bouchons, on peut introduire un lest dans le siège permettant une utilisation subaquatique, par exemple pour de la rééducation. Ces ouvertures sont par exemple laissées ouvertes pour laisser circuler de l'air ou sont par exemple fermées pour rendre la coque du siège 2 étanche. L'air circule par exemple lorsque la coque est chauffée ou refroidie et que la coque n'est pas étanche. Les conduits, référencés 6 ou 22, arrière et avant de réception d'un ou plusieurs organes de déplacement ont par exemple une cloison interne étanche.

Selon un exemple non limitatif de réalisation, des ouvertures traversantes 55 d'évacuation d'eau, sont par exemple réalisées dans l'assise 4.

Des ouvertures traversantes réalisées dans le siège ont par exemple leur cloison interne pleine et étanche, voire renforcée, pour conserver l'étanchéité du siège réalisé creux.

Dans la présente description, certaines parties du véhicule seront désignées comme étant à l'arrière ou à l'avant ou en haut ou en bas du véhicule ou encore sur les côtés latéraux du véhicule, ces indications correspondant à une position à plat du véhicule dans laquelle l'utilisateur, en appui sur l'assise et le dossier, est positionné vers l'avant. Ces positions du véhicule et de l'utilisateur ne sont cependant pas limitatives. Le véhicule peut par exemple reculer ou être penché sur le côté. L'utilisateur peut par exemple se pencher ou tourner son buste.

Des roues du véhicule sont par exemple représentées avec seulement quelques rayons pour des raisons de clarté des dessins, mais les roues peuvent comprendre un nombre suffisant de rayons pour être suffisamment résistantes. Des roues à bâtons ou pleines peuvent aussi être utilisées.

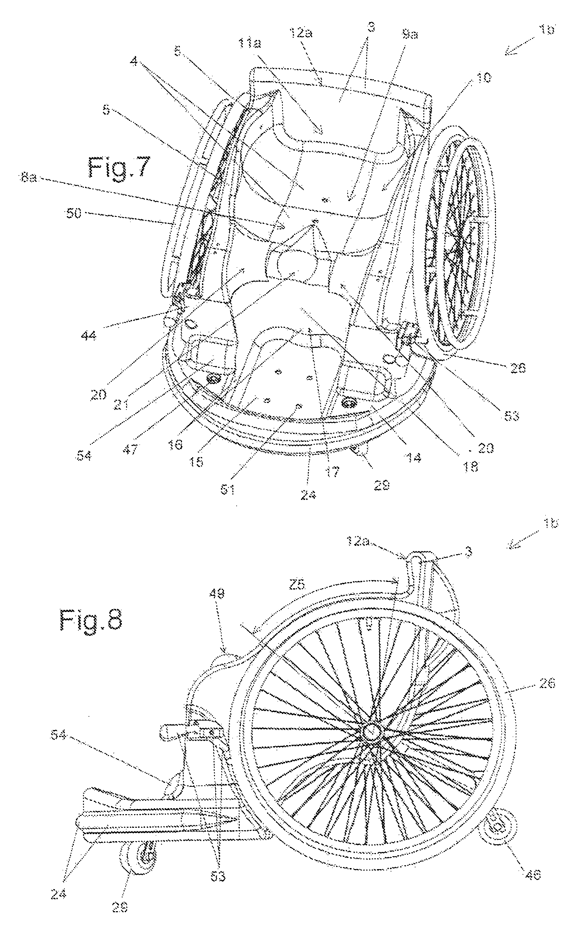

L'assise 4 comprend par exemple une surface d'appui avant, référencée 8 ou 8a, prolongée par une surface d'appui arrière, référencée 9 ou 9a, disposée à un niveau inférieur par rapport à la surface d'appui avant, ces deux surfaces d'appui étant jointes aux rebords latéraux 5 par des surfaces 10 en arrondi. Les rebords latéraux 5 ont par exemple une hauteur déterminée par rapport à une des surfaces d'appui de l'assise de façon à soutenir les muscles abducteurs des cuisses et les muscles grand fessier de l'utilisateur. De manière non limitative, les surfaces d'appui avant et arrière, référencées 8 et 9, de l'assise 4 peuvent être réalisées planes, comme représenté à la figure 1. Les surfaces d'appui avant et arrière, référencées 8a et 9a, peuvent aussi être réalisées en arrondi, comme représenté à la figure 7.

L'utilisateur a ainsi une surface de contact importante avec l'assise. D'autre part le décalage en hauteur permet par exemple de caler l'utilisateur vers l'arrière, cette caractéristique de l'ergonomie de l'assise 4 permettant une bonne assise pour des utilisateurs ayant des mesures de cuisses et de fesses différentes. De plus les surfaces latérales 10 en arrondi permettent d'adapter une même largeur de siège à des utilisateurs ayant des mesures de hanches différentes. Différentes tailles de sièges peuvent par exemple être réalisées, chacune s'adaptant à des utilisateurs ayant des mensurations différentes.

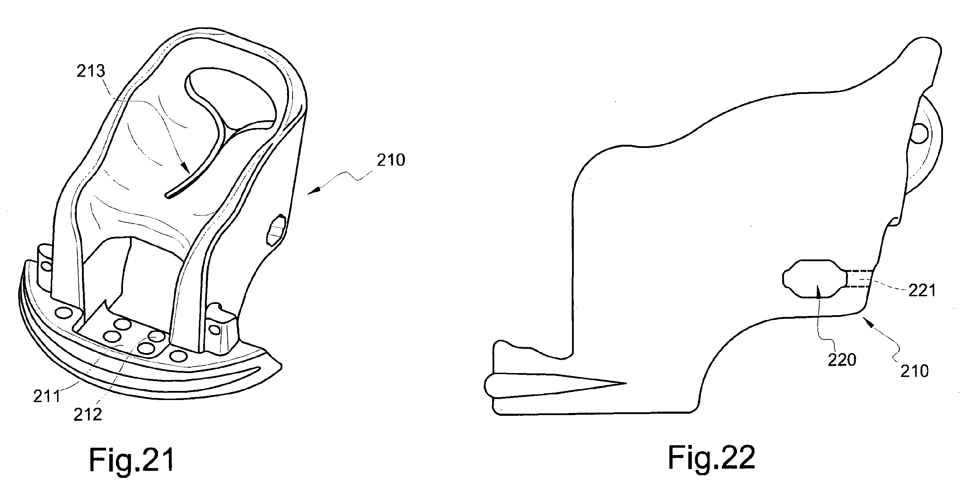

L'assise 4 est par exemple jointe à une partie basse, référencée 11 ou 11a, du dossier 3, cette partie basse comprenant une surface en retrait par rapport à une surface d'appui d'une partie haute, référencée 12 ou 12a, du dossier 3. La surface d'appui de la partie haute, référencée 12 ou 12a, du dossier 3 est par exemple disposée de façon à soutenir la région lombaire de l'utilisateur. Comme illustré à la figure 21, une rainure 213 ménagée dans l'assise du siège permet de limiter la pression exercée par le siège sur une sonde équipant l'utilisateur du véhicule. La surface en retrait de la partie basse, référencée 11 ou 11a, est par exemple disposée de façon à dégager le sacrum et les vertèbres lombaires de l'utilisateur. Les surfaces 11 et 12, en retrait et d'appui réalisées dans le dossier 3, sont par exemple en portion de cylindre, comme représenté à la figure 1. Les surfaces, référencées 11 a et 12a, en retrait et d'appui réalisées dans le dossier 3 peuvent aussi être réalisées selon des formes plus complexes formant des variations d'orientation plus continues. Le dossier 3 comprend par exemple, comme représenté à la figure 8, une partie supérieure élargie puis se rétrécit progressivement vers le bas du dossier 3.

Le siège comprend une plate-forme basse 14 comprenant par exemple deux conduits avant 22 orientés vers le bas destinés à recevoir au moins un organe avant de déplacement, référencé 29, 42 ou 39. Les deux conduits avant 22, destinés à recevoir un ou plusieurs organes de déplacement, sont par exemple réalisés sous la forme d'ouverture traversante cylindrique.

Une cloison pare-chocs 24 arrondie délimite par exemple des côtés latéraux et avant de la plate-forme basse 14 qui a, de manière non limitative, une forme de demi-cercle en vue de dessus. Le pare-chocs 24 est par exemple surélevé à l'avant par exemple pour améliorer la protection à l'avant du pare-chocs. Le pare-chocs comprend par exemple un bourrelet périphérique de renfort.

On ne sortirait pas du cadre de l'invention si le véhicule comprenait une partie avant comprenant un repose-pied et des moyens de liaison avec au moins un organe avant de déplacement, cette partie avant étant par exemple fixée sur un siège monobloc en plastique. Mais cette partie avant est avantageusement intégrée au siège.

Dans un mode de réalisation non illustré, au moins le pare-chocs 24, avantageusement toute la plate-forme 14, est fixé de manière amovible sur le siège 2. Cette fixation est réalisée, par exemple, par une combinaison de glissières et de tiges.

La plate-forme basse 14 comprend par exemple un renfoncement formé par au moins un plancher 15 de pose des pieds de l'utilisateur entouré entièrement par un rebord périphérique 16 délimitant le renfoncement. La hauteur de ce renfoncement est par exemple comprise entre 3cm et 20cm.

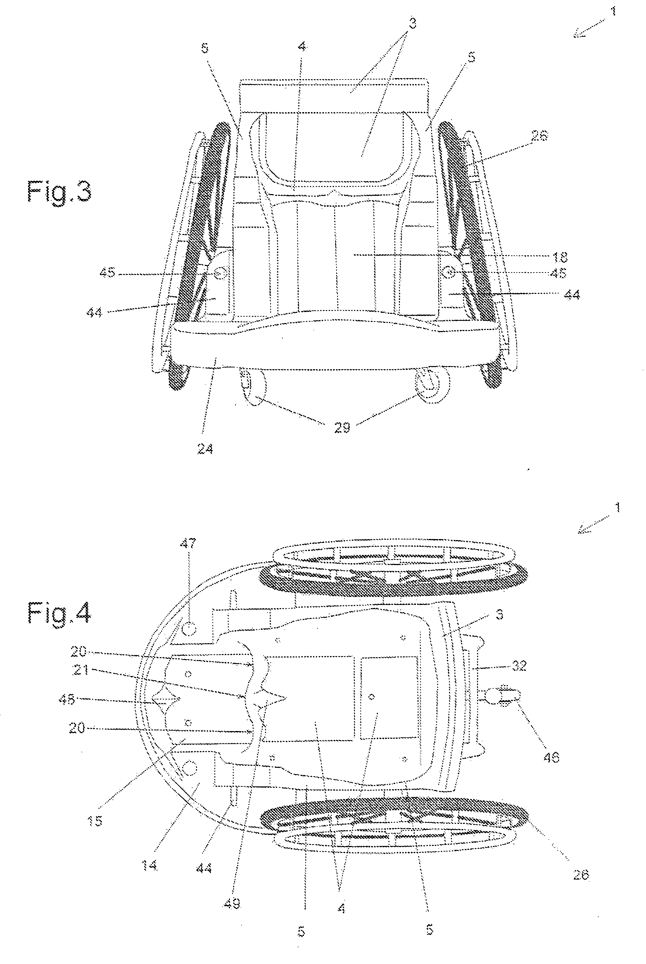

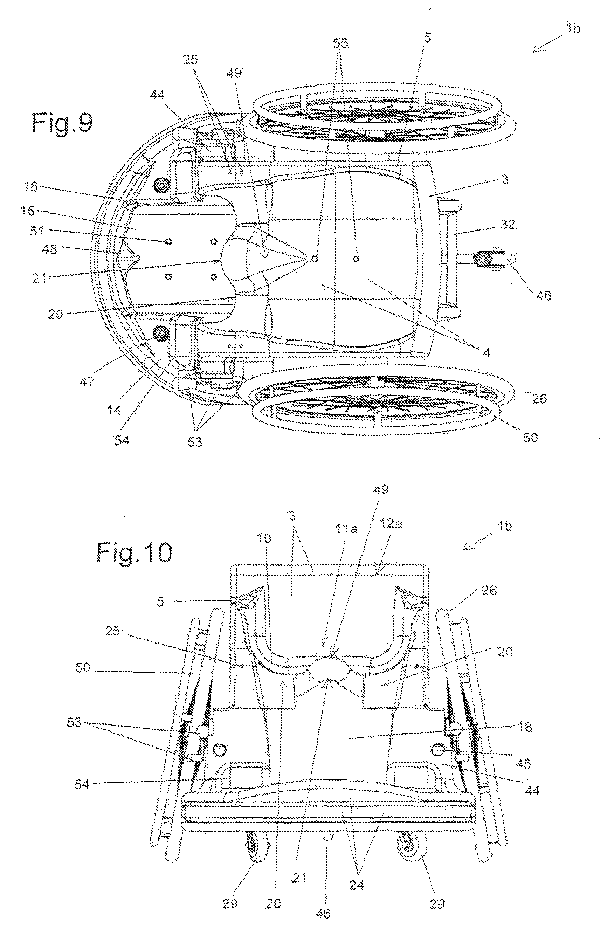

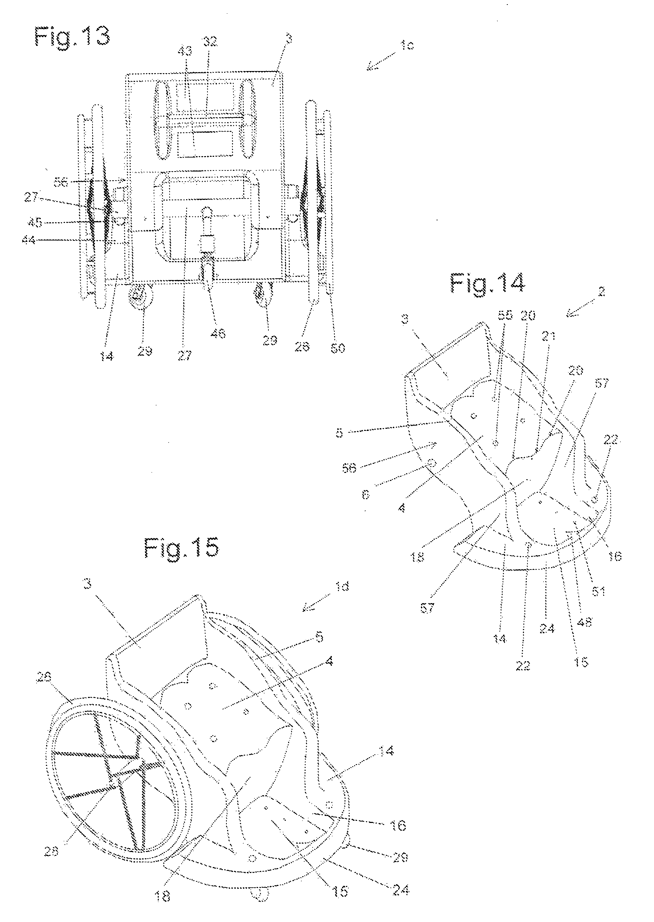

Les pieds de l'utilisateur sont avantageusement maintenus dans cet espace protégé. Comme représenté à la figure 4 ou à la figure 9, une partie saillante 48 disposée sur le plancher 15 à l'avant et au milieu du renfoncement, permet par exemple de séparer le renfoncement en deux espaces pour chacun des pieds de l'utilisateur mais aussi de renforcer le pare-chocs par des appuis arrières. Le rebord périphérique 16 délimitant le renfoncement permet notamment un maintien latéral des pieds. Selon un exemple non limitatif de réalisation, des ouvertures traversantes 51 d'évacuation d'eau peuvent par exemple être réalisées dans le plancher 15. Comme indiqué à la figure 14, des parties latérales 57 peuvent aussi être disposées au-dessus et de chaque côté à l'arrière de ce rebord périphérique 16, par exemple pour bloquer ou protéger les jambes de l'utilisateur. Ces parties latérales 57 intégrées au siège 2, forment par exemple des cloisons de protection et de blocage des jambes de l'utilisateur.

Le siège 2 intégrant la plate-forme basse 14, comprend par exemple des cloisons descendant vers l'avant, de l'assise 4 et des rebords 5, jusqu'à plate-forme basse 14. De manière non limitative, des bourrelets de renfort 54, intégrés au siège 2, sont par exemple disposés à l'avant de ces cloisons de liaison et sur la plate-forme basse 14.

Le rebord délimitant le renfoncement comprend par exemple une partie arrière 17 prolongée par une cloison 18 rejoignant un bord avant, référencé 20 et 21, de l'assise 4, le bord avant de l'assise étant positionné en avant de la partie arrière 17 du rebord 16 délimitant le renfoncement. De cette façon les talons de l'utilisateur sont disposés en arrière par rapport à ses genoux. Cette position est avantageuse pour produire des efforts avec les bras. L'effort est facilité et l'amplitude du mouvement est augmentée. De plus la position de l'utilisateur penché en avant favorise son équilibre lors de l'avance du véhicule. De plus un espace qui aurait pu être disposé entre une partie repose-pied et l'assise, est complètement fermé, annulant ainsi tout risque pour l'utilisateur d'avoir ses pieds glissant sous le véhicule. Les cloisons latérales 57, protégeant les mollets de l'utilisateur, permettent par exemple aussi de fermer cette espace.

Le bord avant, référencé 20 et 21, de l'assise 4 comprend par exemple deux courbures 20 vers l'arrière de positionnement des jambes de l'utilisateur, ces deux courbures 20 vers l'arrière étant jointes par une partie médiane 21 courbée vers l'avant. Cette partie médiane 21 comprend par exemple de plus une partie saillante 49 sur le dessus, cette partie saillante 49 comprenant deux portions concaves arrondies d'appui des muscles adducteurs des cuisses de l'utilisateur.

Le véhicule comprend par exemple des logements filetés 25 borgnes intégrés à l'extérieur du siège, disposés latéralement par rapport à l'assise 4. Ces logements filetés 25 sont par exemple disposés de part et d'autre de l'arrière de l'extérieur de l'assise et sont par exemple destinés à la fixation d'une ceinture 60 ou d'une sangle de maintien de l'aine ou des muscles abdominaux de l'utilisateur. Ces logements filetés 25 peuvent aussi être disposés de part et d'autre de l'avant de l'assise 4 et sont par exemple destinés à la fixation d'une ceinture 61 ou d'une sangle de maintien des genoux de l'utilisateur. Avantageusement l'utilisateur peut être maintenu dans le siège par une ou plusieurs ceintures. Le maintien des genoux, en plaquant l'avant des cuisses contre l'assise, permet par exemple d'empêcher les pieds de sortir de leur logement.

Les rebords latéraux 5 en se prolongeant vers le bas de manière à former les deux conduits arrière 6, forment des surfaces latérales extérieures planes 56. Ces surfaces extérieures planes 56 s'étendent par exemple sur le côté des cloisons 57 de protection des jambes.

Le siège comprend des oreilles 44 qui s'étendent en hauteur et sur les côtés et sont réalisées sur la plate-forme basse 14 et contre les surfaces latérales extérieures planes 56. Les oreilles comprennent chacune un conduit 45 pour accessoire, orienté d'avant en arrière, ce conduit 45 étant réalisé à un niveau déterminé de manière à ce que sa partie supérieure soit au niveau de la partie inférieure des conduits arrière, comme représenté à la figure 13. Ce conduit dans chaque oreille, par exemple traversant et cylindrique, permet par exemple d'y glisser une barre passant d'autre part sous une barre arrière maintenue dans les conduits arrière 6. Deux barres latérales ainsi liées au véhicule permettent par exemple pour porter le véhicule, selon le principe de la chaise à porteurs. Un véhicule roulant comme représenté à la figure 13, ou un autre type de véhicule peut par exemple être soulevé pour passer un obstacle.

Chaque oreille 44 peut aussi permettre l'installation d'un dispositif d'éclairage comprenant par exemple une dynamo en appui sur une des roues.

L'organe arrière de déplacement comprend par exemple deux roues arrière 26 et une barre 27 maintenue dans les conduits arrière 6, cette barre 27 étant équipée à chacune de ses extrémités, d'un organe 28 de blocage de la barre en translation et d'articulation d'une des roues.

Dans un mode de réalisation non illustré, les extrémités de la barre 27 reçoivent, de manière amovible, une rallonge s'intercalant entre l'extrémité de la barre 27 et l'organe de blocage et d'articulation.

Cet organe est pourvu d'un orifice formant un logement de réception de l'arbre de rotation de la roue. Cet orifice est plus ou moins incliné par rapport à l'axe longitudinal de la barre 27. Ainsi, on incline plus ou moins, par rapport à la verticale, la roue tout en évitant, grâce à la rallonge, qu'elle ne touche le siège. Il est ainsi possible d'avoir, pour un véhicule donné, un jeu de rallonges et/ou d'organes avec différents orifices afin de pouvoir changer l'inclinaison des roues du véhicule.

Les rebords latéraux 5 ont par exemple un profil supérieur suivant le contour d'une des roues sur une portion angulaire déterminée, référencée Z5, comme représenté à la figure 8. La partie supérieure des rebords latéraux suivant le profil des roues s'étend par exemple sur un angle compris entre 15° et 75°. Les organes avant de déplacement comprennent par exemple chacun une roue avant 29 orientable. La roue avant 29 est par exemple une roulette articulée autour d'un axe maintenu par deux branches écartées l'une de l'autre et reliées à un axe pivotant par rapport à la plate-forme 14. Cet axe pivotant par rapport à la plate-forme comprend par exemple un élément supérieur de fixation 47 monté par vissage.

En variante, la position de la roue avant 29 est adaptée pour permettre à un utilisateur de prendre appui sur la plate forme basse 14, sans que le véhicule bascule, par exemple pour se lever ou s'asseoir dans le siège.

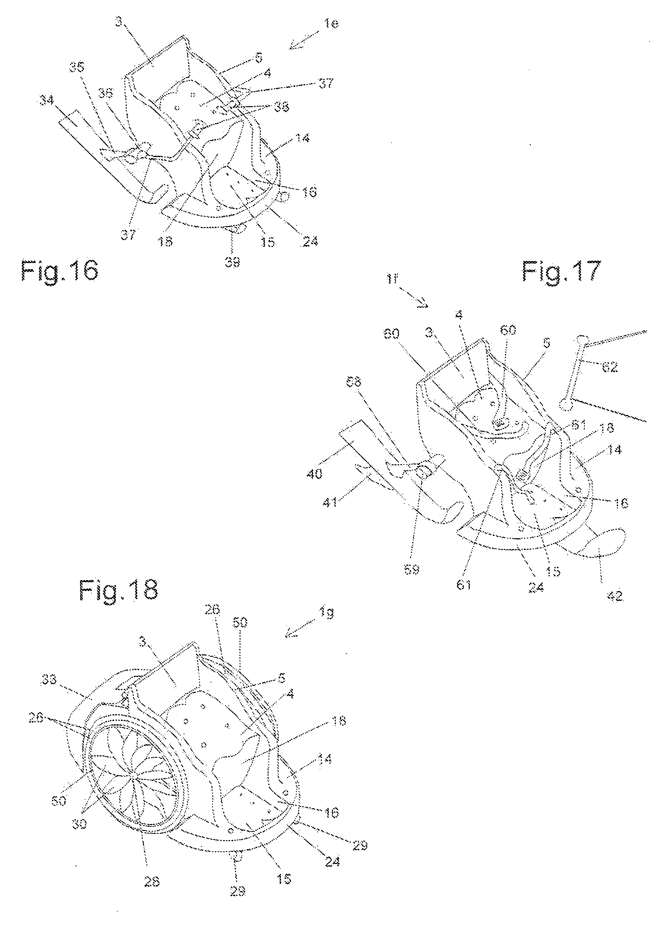

Comme représenté à la figure 18, les roues arrière 26 du véhicule, référencé 1 g, comprennent par exemple chacune un anneau extérieur de roulement en plastique moulé, relié audit organe 28 d'articulation par des ailettes 30 d'appui sur l'eau. Les roues équipées d'ailettes, tournant dans l'eau permettent par exemple de faire avancer le véhicule flottant dans l'eau. De manière non limitative, les roues en plastique moulées sont par exemple obtenues par rotomoulage et par exemple remplies de mousse. Même si les roues sont par exemple alors alourdies la mousse leur permet de mieux flotter. Les ailettes 30 d'appui sur l'eau se rétrécissent par exemple dans une partie de jonction avec l'anneau extérieure de roulement 26, de façon à laisser un espace libre en vis-à-vis d'une main courante 50 de cette roue. Le siège comprend par exemple sous l'assise 4 un bossage 31 dans lequel est réalisé une prise en creux ouverte vers l'avant et une poignée 32 réalisée derrière le dossier 3. Un flotteur 33 de stabilisation du véhicule dans l'eau est par exemple accroché à cette poignée 32 et à la prise en creux. Une prise en creux est par exemple représentée sur le véhicule, référencé 1a, représenté à la figure 6.

Comme représenté à la figure 16, le véhicule, référencé 1 e, comprend par exemple une pluralité d'organes de déplacement arrière comprenant chacun un ski 34 de glissement sur la neige fixé, par une tige 35, à une portion cylindrique 36 articulée dans un des conduits arrière 6. Cette tige 35, par exemple en aluminium ou en résine, est par exemple fixée d'autre part à une branche 37 remontant au-dessus du siège et se terminant par une poignée 38 d'orientation du ski. Cette branche 37 est par exemple en aluminium ou en résine. Chaque organe de déplacement avant comprend par exemple au moins un ski avant 39 de glissement sur la neige. Les skis avant 39 sont par exemple de taille réduite par rapport aux skis arrière 34. L'utilisateur peut par exemple utiliser ce véhicule, référencé 1 e, de la même façon qu'une luge ou un traîneau.

En variante, le véhicule ne comprend qu'un seul ski fixé sur les conduits arrière du véhicule.

Quel que soit le type de véhicule fabriqué, référencé 1, 1 a, 1 b, 1 c, 1 d, 1 e ou 1 g, des ceintures, référencées 60 ou 61, peuvent par exemple être fixées au siège 2. Une ceinture peut aussi être remplacée par une sangle ayant à son extrémité libre, une attache venant se fixée sur un élément de fixation lui-même fixé sur une partie latérale de l'assise 4.

Comme représenté à la figure 17, l'organe de déplacement arrière comprend par exemple deux skis 40 de glissement sur l'eau. Les organes de déplacement avant comprennent par exemple des éléments de liaison avec un ski de glissement sur l'eau allant de l'avant à l'arrière fig. 42, disposé de façon médiane sous le véhicule. Les skis 40 de glissement sur l'eau sont par exemple équipés d'un aileron 41 sur leur face inférieure. Un ski 40 arrière est par exemple relié, par une branche 58 en aluminium ou en résine, à une barre 59 de soutien du siège 2 au-dessus des skis 40 arrière. L'utilisateur saisit par exemple une barre 62 de préhension qui le tracte vers l'avant. La barre est par exemple elle-même tractée par un bateau moteur ou par un cerf-volant tel qu'une aile de kitesurf. L'utilisateur peut par exemple exercer des efforts différents sur les bras droit et gauche, tout en se penchant sur un des côtés pour réaliser un virage.

De façon avantageuse un même siège 2, tel que celui représenté à la figure 14, peut être utilisé pour la fabrication :
- d'un véhicule, référencé 1d, roulant à la force des bras, ou
- d'un véhicule, référencé 1e, glissant sur la neige, ou
- d'un véhicule, référencé 1f, glissant sur l'eau ou
- d'un véhicule, référencé 1 g, pouvant avancer dans l'eau ou rouler sur le sol, à la force des bras.

La main courante 50 est par exemple utilisée pour exercer une action sur les roues, à la force des bras.

De manière non limitative, les véhicules équipés de roues arrière 26, ont par exemple des roues droites comme sur le véhicule, référencé 1 c, représenté à la figure 13 ou des roues dont la partie supérieure est inclinée vers le siège comme sur les véhicules, référencés 1 b ou 1, représentés aux figures 3 et 10. Les roues comprennent par exemple une jante et un pneu.

Un véhicule équipé de roues arrière est par exemple équipé d'organes de freinage 53. Un organe de freinage 53 est par exemple fixé dans des logements filetés borgnes noyés dans une oreille 44 du siège 2. L'organe de freinage 53 comprend par exemple une tige équipée à une extrémité proche de la roue, d'un cylindre d'appui sur la roue et équipée à son extrémité opposée d'une poignée d'activation ou de désactivation du frein. Cette tige est par exemple articulée autour d'un élément fixé au siège 2.

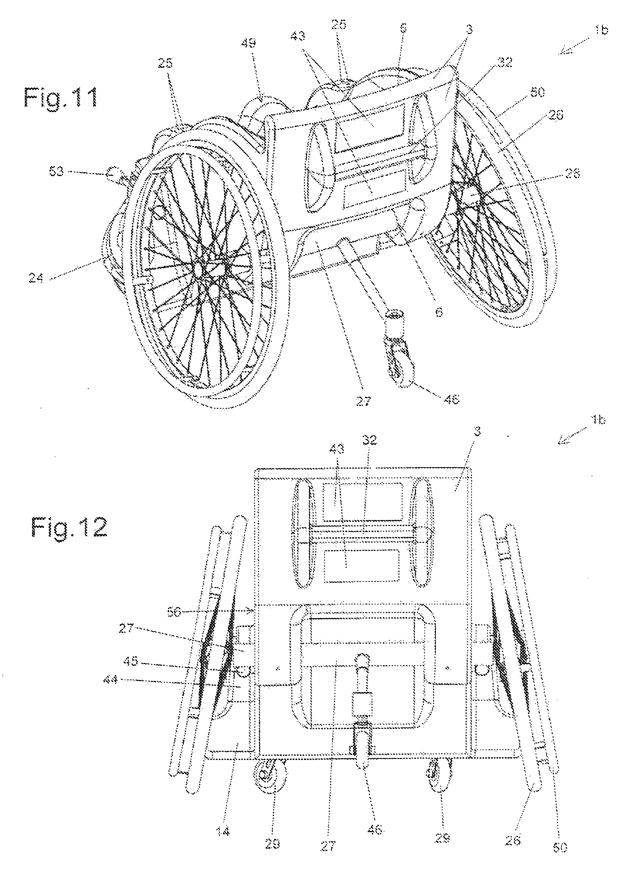

Un véhicule équipé de roues arrière 26, est par exemple équipé d'une roulette arrière 46 anti-basculement, comme représenté à la figure 11. La roulette arrière 46 est par exemple disposée dans une position en arrière par rapport au siège et à une hauteur déterminée de sorte qu'elle reste au-dessus du sol, lorsque le véhicule roule sur une surface plane en appui sur ses roues avant et ses roues arrière. Une tige de positionnement de la roulette 46 anti-basculement est par exemple fixée à la barre arrière 27 aux extrémités de laquelle sont disposés les organes 28 d'articulation des roues arrière.

Le procédé de fabrication du siège 2 par moulage, comme par exemple par rotomoulage, permet avantageusement d'utiliser une ou plusieurs parties 43 de cloisons du siège 2 pour réaliser un marquage en relief d'une inscription ou d'un dessin. Ce ou ces marquages en relief sont par exemple réalisés derrière le dossier. Un numéro d'immatriculation ou d'identification du véhicule sera par exemple ainsi rendu infalsifiable.

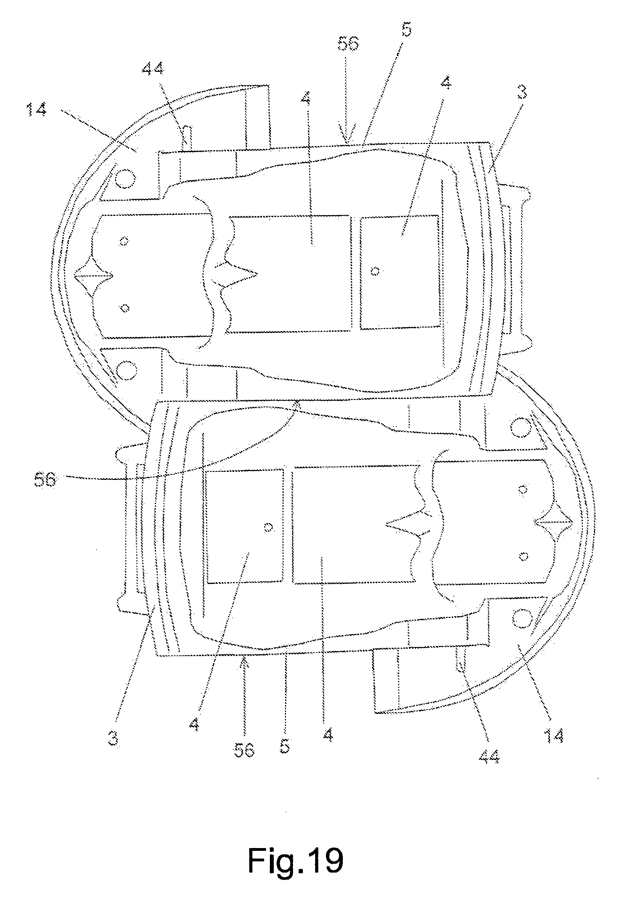

Comme représenté à la figure 19, les sièges 2 munis de surfaces 56 latérales planes prolongeant leurs rebords latéraux 5, peuvent être stockés bord à bord. De manière non limitative, les sièges 2 sont par exemple posés en appui sur une surface avant inférieure plane correspondant au-dessus de la plate-forme basse 14. Le dessous arrière d'un siège repose par exemple sur une cale ou sur une partie d'un siège voisin, telle que par exemple une oreille 44 du siège voisin.

Le stockage de deux sièges 2, tel que représenté à la figure 19, n'est pas limitatif et trois sièges ou quatre sièges ou plus, peuvent être par exemple stockés tête-bêche. Un siège 2 disposé entre deux autres sièges, a par exemple ses deux surfaces latérales 56 en contact avec les deux sièges voisins.

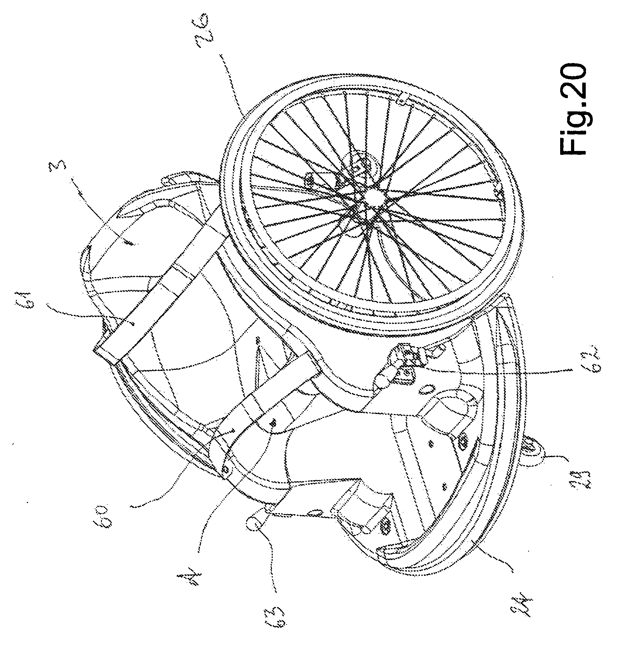

Sur la figure 20, on a représenté une variante de réalisation du véhicule 1 équipé de deux sangles 60 et 61, du type à enrouleur afin d'immobiliser l'utilisateur sur ledit véhicule. Ces sangles 60 et 61 s'enroulent par exemple sur un enrouleur (non représenté) intégré dans l'assise 4 du véhicule, côté droit par exemple, et se fixant sur une attache, côté gauche par exemple. Le véhicule est muni d'un mécanisme de freinage 62 de la roue 26 et manoeuvrable à l'aide d'une poignée 63.

La figure 21 illustre un mode de réalisation d'un siège 210 dont la plateforme 211 comprend des orifices 212 propres à recevoir des reliefs de forme complémentaire fixés sur des plaques formant des semelles d'appui des pieds de l'utilisateur. Ces plaques, pour plus de lisibilité, ne sont pas illustrées. Avantageusement, ces plaques sont empilables, une de leurs faces étant pourvue d'orifices et la face opposée étant équipée de reliefs. Ainsi, il est possible de régler individuellement la hauteur de chaque repose-pied, amovible, formé par les plaques.

La figure 22 est une vue de côté du siège illustré à la figure 21. Une découpe 220 permet un déplacement en translation, d'avant en arrière selon la double flèche F, du siège 210 par rapport à la barre 27 reliant les organes arrière du déplacement. Le déplacement est réalisé à l'aide d'un dispositif de réglage connu en soi, par exemple une vis sans fin, non représentée, insérée dans un logement 221.

En variante non illustrée, le véhicule est pourvu de freins, équipant au moins un des organes de déplacement, commandés par un jeu de câbles souples, directement manoeuvrables par l'utilisateur. Avantageusement, celui-ci dispose d'une poignée, similaire à une poignée de vélo, montée à l'extrémité des câbles de freins pour actionner ces derniers.

Les différentes formes ergonomiques du siège permettent d'améliorer le confort et de faciliter son utilisation. Les formes ergonomiques du siège permettent aussi son utilisation par des personnes handicapées physiquement. Les formes ergonomiques du siège permettent notamment de diminuer les risques d'escarre en multipliant les surfaces d'appuis de l'utilisateur sur son siège. Cette bonne ergonomie permet aussi d'augmenter le confort et donc la durée d'utilisation du véhicule, par exemple lors d'une pratique sportive.

Il doit être évident pour l'homme du métier que la présente invention permet d'autres variantes de réalisation. Par conséquent, les présents modes de réalisation doivent être considérés comme illustrant l'invention définie par les revendications jointes.

## Revendications

1. Véhicule (1) comprenant un siège (2) pour un utilisateur, le siège (2) comprenant un dossier (3), une assise (4) et des rebords latéraux (5) disposés de part et d'autre de l'assise, le siège (2), en plastique, étant réalisé d'un seul bloc, les rebords latéraux (5) étant prolongés vers le bas de manière à former deux conduits arrière (6) destinés à recevoir au moins un organe arrière de déplacement (26, 27, 28 ; 34, 35, 36 ; 58, 59,40), **caractérisé en ce que** les rebords latéraux (5) en se prolongeant vers le bas de manière à former les deux conduits arrière (6), forment des surfaces latérales extérieures planes, le siège comprenant des oreilles (44) s'étendant en hauteur et sur les côtés et réalisées sur une plate-forme basse (14) du siège et contre les surfaces latérales extérieures planes, les oreilles comprenant chacune un conduit (45) pour accessoire orienté d'avant en arrière réalisé à un niveau de manière à ce que sa partie supérieure soit au niveau de la partie inférieure des conduits (6) arrière et **en ce que** le siège, creux, est adapté pour recevoir un dispositif de chauffage d'un polymère thermoformable constitutif du siège afin de réaliser un siège adapté à chaque utilisateur.

2. Véhicule (1) selon la revendication 1, **caractérisé en ce que** l'assise comprend une surface d'appui avant (8) prolongée par une surface d'appui arrière (9) disposée à un niveau inférieur par rapport à la surface d'appui avant (8), ces deux surfaces d'appui (8, 9) étant jointes aux rebords latéraux (5) par des surfaces (10) en arrondi, les rebords latéraux (5) ayant une hauteur déterminée par rapport à une des surfaces d'appui de l'assise de façon à soutenir les muscles abducteurs des cuisses et les muscles grand fessier de l'utilisateur.

3. Véhicule selon la revendication 1 ou 2, **caractérisé en ce que** l'assise (4) est jointe à une partie basse (11) du dossier (3), cette partie basse (11) comprenant une surface en retrait par rapport à une surface d'appui d'une partie haute (12) du dossier (3), la surface d'appui de la partie haute (12) du dossier (3) étant disposée de façon à soutenir la région lombaire de l'utilisateur, la surface en retrait de la partie basse (11) étant disposée de façon à dégager le sacrum et les vertèbres lombaires de l'utilisateur.

4. Véhicule selon l'une des revendications 1 à 3, **caractérisé en ce que** la plate-forme basse (14) comprend deux conduits avant (22) orientés vers le bas destinés à recevoir au moins un organe avant de déplacement (29, 42, 39), une cloison pare-chocs (24) arrondie délimitant des côtés latéraux et avant de la plate-forme basse (14).

5. Véhicule selon la revendication 4, **caractérisé en ce que** la plate-forme basse (14) comprend un renfoncement formé par au moins un plancher (15) de pose des pieds de l'utilisateur entouré entièrement par un rebord périphérique (16) délimitant le renfoncement.

6. Véhicule selon la revendication 5, **caractérisé en ce que** le rebord délimitant le renfoncement comprend une partie arrière (17) prolongée par une cloison (18) rejoignant un bord avant (20, 21) de l'assise, le bord avant (20, 21) de l'assise étant positionné en avant de la partie arrière (17) du rebord (16) délimitant le renfoncement.

7. Véhicule selon la revendication 6, **caractérisé en ce que** le bord avant (20, 21) de l'assise comprend deux courbures (20) vers l'arrière de positionnement des jambes de l'utilisateur, ces deux courbures (20) vers l'arrière étant jointes par une partie médiane (21) courbée vers l'avant, cette partie médiane comprenant de plus une partie saillante (49) sur le dessus, cette partie saillante comprenant deux portions concaves arrondies d'appui des muscles adducteurs des cuisses de l'utilisateur.

8. Véhicule selon l'une des revendications 4 à 7, **caractérisé en ce qu'**il comprend des logements filetés (25) borgnes noyés dans le siège, disposés latéralement par rapport à l'assise (4), ces logements filetés (25) étant disposés de part et d'autre de l'arrière de l'assise à l'extérieur et étant destinés à la fixation d'une ceinture ou d'une sangle de maintien de l'aine ou des muscles abdominaux de l'utilisateur ou ces logements étant disposés de part et d'autre de l'avant de l'assise (4) et étant destinés à la fixation d'une ceinture ou d'une sangle de maintien des genoux de l'utilisateur.

9. Véhicule selon l'une des revendications 4 à 8, **caractérisé en ce que** l'organe arrière de déplacement comprend deux roues arrière (26) et une barre (27) maintenue dans les conduits arrière (6), cette barre (27) étant équipée à chacune de ses extrémités, d'un organe (28) de blocage de la barre en translation et d'articulation d'une des roues, les rebords latéraux (5) ayant un profil supérieur suivant le contour d'une des roues sur une portion angulaire déterminée comprise entre 15° et 75°, deux organes avant de déplacement comprenant chacun au moins une roue avant (29) orientable.

10. Véhicule selon la revendication 9, **caractérisé en ce que** les roues arrière (26) comprennent chacune un anneau extérieur de roulement en plastique moulé, relié audit organe (28) d'articulation par des ailettes (30) d'appui sur l'eau se rétrécissant dans une partie de jonction avec l'anneau extérieure de roulement de façon à laisser un espace libre en vis-à-vis d'une main courante (50) de cette roue, le siège comprenant sous l'assise (4) un bossage (31) dans lequel est réalisé une prise en creux ouverte vers l'avant et une poignée (32) réalisée derrière le dossier (3), un flotteur (33) de stabilisation du véhicule dans l'eau étant accroché à cette poignée (32) et à la prise en creux.

11. Véhicule selon l'une des revendications 4 à 8, **caractérisé en ce qu'**il comprend deux organes de déplacement arrière comprenant chacun un ski (34) de glissement sur la neige fixé, par une tige (35), à une portion cylindrique (36) articulée dans un des conduits arrière (6), cette tige (35) étant fixée d'autre part à une branche (37) remontant au-dessus du siège et se terminant par une poignée (38) d'orientation du ski (34), deux organes de déplacement avant comprenant chacun au moins un ski avant (39) de glissement sur la neige.

12. Véhicule selon l'une des revendications 4 à 8, **caractérisé en ce que** l'organe de déplacement arrière comprend deux skis (40) de glissement sur l'eau, l'organe de déplacement avant comprenant au moins un ski de glissement sur l'eau allant de l'avant à l'arrière (42), disposé de façon médiane sous le véhicule.

13. Procédé de fabrication d'un véhicule selon l'une des revendications 1 à 12, **caractérisé en ce que** le siège (2) est réalisé creux par rotomoulage.

14. Procédé de fabrication d'un véhicule selon la revendication 13, **caractérisé en ce qu'**une ou plusieurs parties (43) de cloisons du siège sont utilisées pour un marquage en relief d'une inscription ou d'un dessin.

## Patentansprüche

1. Fahrzeugs (1), das einen Sitz (2) für einen Benutzer umfasst, wobei der Sitz (2) eine Rückenlehne (3), eine Sitzfläche (4) und Seitenränder (5), die auf beiden Seiten der Sitzfläche angeordnet sind, aufweist, wobei der Sitz (2) aus Kunststoff in einem einzigen Teil hergestellt ist und die Seitenränder (5) nach unten verlängert sind, um zwei hintere Kanäle (6) zu bilden, die vorgesehen sind, mindestens ein hinteres Organ zur Fortbewegung (26, 27, 28; 34, 35, 36; 58, 59, 40) aufzunehmen, **dadurch gekennzeichnet, dass** die Seitenränder (5), indem sie sich nach unten verlängern, um die zwei hinteren Kanäle (6) zu bilden, ebene äußere Seitenflächen bilden, wobei der Sitz Ansätze (44) umfasst, die sich in die Höhe und auf den Seiten erstrecken und an einer unteren Plattform (14) des Sitzes und gegen die ebenen äußeren Seitenflächen realisiert sind, wobei die Ansätze jeder einen Durchgang (45) für ein Zubehör umfassen, der von vorn nach hinten orientiert ist und der an einem Niveau angeordnet ist, dass sein oberer Bereich in Höhe des unteren Bereichs der hinteren Kanäle (6) liegt, und dass der vertiefte Sitz geeignet ist, eine Vorrichtung zum Aufheizen eines den Sitz bildendes wärmeverformbaren Polymers aufzunehmen, um einen für jeden Benutzer angepassten Sitz zu realisieren.

2. Fahrzeug (1) nach Anspruch 1, **dadurch gekennzeichnet, dass** die Sitzfläche eine vordere Auflagefläche (8) aufweist, die durch eine hintere Auflagefläche (9) verlängert wird, die in einer niedrigeren Höhe in Bezug auf die vordere Auflagefläche (8) angeordnet ist, wobei diese zwei Auflageflächen (8, 9) mit den Seitenrändern (5) über abgerundete Flächen (10) verbunden sind, wobei die Seitenränder (5) eine Höhe aufweisen, die in Bezug auf eine der Auflageflächen der Sitzfläche bestimmt ist, um die Abduktorenmuskeln der Schenkel und die großen Gesäßmuskeln des Benutzers zu unterstützen.

3. Fahrzeug (1) nach Anspruch 1 oder 2, **dadurch gekennzeichnet, dass** die Sitzfläche (4) mit einem unteren Bereich (11) der Rückenlehne (3) verbunden ist, wobei dieser untere Bereich (11) eine in Bezug auf eine Anlagefläche eines oberen Bereichs (12) der Rückenlehne (3) zurückgenommenen Fläche umfasst, wobei die Anlagefläche des oberen Bereichs (12) der Rückenlehne (3) so angeordnet ist, dass der Lendenbereich des Benutzers unterstützt wird und die zurückgenommene Fläche des unteren Bereichs (11) so angeordnet ist, dass das Kreuzbein und die Lendenwirbel des Benutzers frei bleiben.

4. Fahrzeug nach einem der Ansprüche 1 bis 3, **dadurch gekennzeichnet, dass** die untere Plattform (14) zwei vordere Kanäle (22) aufweist, die nach unten gerichtet sind und vorgesehen sind, zumindest ein vorderes Organ zur Fortbewegung (29, 42, 39) aufzunehmen, wobei eine abgerundete Stoßfängerwand (24) die Seiten und die Vorderseite der unteren Plattenform (14) begrenzt.

5. Fahrzeug nach Anspruch 4, **dadurch gekennzeichnet, dass** die untere Plattform (14) eine Vertiefung umfasst, die durch mindestens einen Boden (15) zum Auflegen der Füße des Benutzers gebildet wird, der vollständig durch einen Umfangsrand (16) umgeben wird, der die Vertiefung begrenzt.

6. Fahrzeug nach Anspruch 5, **dadurch gekennzeichnet, dass** der die Vertiefung begrenzende Rand einen hinteren Bereich (17) aufweist, der durch eine Trennwand (18) verlängert wird, der sich an einen vorderen Rand (20, 21) der Sitzfläche anschließt, wobei der vordere Rand (20, 21) der Sitzfläche vor dem hinteren Bereich (17) des Randes (16) positioniert ist, der die Vertiefung begrenzt.

7. Fahrzeug nach Anspruch 6, **dadurch gekennzeichnet, dass** der vordere Rand (20, 21) der Sitzfläche zwei nach hinten gerichtete Krümmungen (20) für die Positionierung der Beine des Benutzers umfasst, wobei diese zwei nach hinten gerichtete Krümmungen (20) durch einen Mittelbereich (21) verbunden sind, der nach vorne gekrümmt ist, wobei dieser Mittelbereich außerdem oben einen hervorspringenden Bereich (49) aufweist, der zwei abgerundete konkave Bereiche zum Abstützen der Adduktorenmuskeln der Schenkel der Benutzers aufweist.

8. Fahrzeug nach einem der Ansprüche 4 bis 7, **dadurch gekennzeichnet, dass** es in dem Sitz versenkte Sackgewindeaufnahmen (25) umfasst, die in Bezug auf die Sitzfläche (4) seitlich angeordnet sind, wobei diese Gewindeaufnahmen beidseitig des hinteren Teils der Sitzfläche außen angeordnet sind und für die Befestigung eines Gurtes oder eines Haltebandes für die Leiste oder die Bauchmuskeln des Benutzers dienen oder diese Aufnahmen beidseitig des Vorderteils der Sitzfläche (4) angeordnet sind und zur Befestigung eines Gurtes oder eines Haltebandes für die Knie des Benutzers dienen.

9. Fahrzeug nach einem der Ansprüche 4 bis 8, **dadurch gekennzeichnet, dass** das hintere Organ zur Fortbewegung zwei Hinterräder (26) und eine Stange (27) umfasst, die in den hinteren Kanälen (6) gehalten wird, wobei diese Stange (27) an jedem ihrer Enden mit einem Organ (28) zur translatorischen Festlegung der Stange und zur gelenkigen Anordnung eines der Räder ausgerüstet ist, wobei die Seitenränder (5) ein oberes Profil haben, das der Kontur eines der Räder über einen bestimmten Winkelbereich folgt, der zwischen 15° und 75° liegt, wobei zwei vordere Organe zur Fortbewegung jedes mindestens ein orientierbares Vorderrad (29) umfassen.

10. Fahrzeug nach Anspruch 9, **dadurch gekennzeichnet, dass** die hinteren Räder (26) jedes einen äußeren Laufring aus geformtem Kunststoff umfasst, der mit dem Gelenkorgan (28) über Wasserauflageflügel (30) verbunden ist, die sich in einem Bereich der Verbindung mit dem äußeren Laufring verjüngen, um einen freien Raum gegenüber einem Handlauf (50) dieses Rades zuzulassen, wobei der Sitz unter der Sitzfläche (4) eine Erhöhung (31), in der ein nach vorne offener vertiefter Griff und einen hinter der Rücklehne (3) angeordnete Haltegriff (32) aufweist, wobei ein Schwimmer (33) zur Stabilisierung des Fahrzeugs im Wasser an diesem Haltegriff (32) und dem vertieften Griff befestigt ist.

11. Fahrzeug nach einem der Ansprüche 4 bis 8, **dadurch gekennzeichnet, dass** es zwei hintere Organe zur Fortbewegung aufweist, die jedes einen Ski (34) zum Gleiten auf Schnee umfassen, der über einen Stab mit einem zylindrischen Teil (36) verbunden ist, das in einem der hinteren Kanäle (6) angelenkt ist, wobei dieser Stab (35) andererseits an einem Arm (37) befestigt ist, der über den Sitz ansteigt und in einem Griff (38) zur Orientierung des Skis (34) endet, wobei zwei vordere Organe zur Fortbewegung jedes mindestens einen vorderen Ski (39) zum Gleiten auf dem Schnee umfasst.

12. Fahrzeug nach einem der Ansprüche 4 bis 8, **dadurch gekennzeichnet, dass** das hintere Organ zur Fortbewegung zwei Skis (40) zum Gleiten auf Wasser umfasst, wobei das vordere Organe zur Fortbewegung mindestens einen Ski zum Gleiten auf Wasser umfasst, der sich von vorn nach hinten (42) erstreckt und in mittlerer Anordnung unter dem Fahrzeug vorgesehen ist.

13. Verfahren zur Herstellung eines Fahrzeugs nach einem der Ansprüche 1 bis 12, **dadurch gekennzeichnet, dass** der Sitz (2) vertieft durch Rotationsformen hergestellt ist.

14. Verfahren zur Herstellung eines Fahrzeugs nach Anspruch 13, **dadurch gekennzeichnet, dass** ein oder mehrere Bereiche (43) von Wänden des Sitzes für eine Reliefmarkierung einer Inschrift oder einer Zeichnung verwendet werden.

## Claims

1. A vehicle (1) including a user seat (2), the seat (2) comprising a backrest (3), a seat portion (4) and lateral edges (5) provided on both sides of the seat portion, the seat (2), which is made from plastic, being produced in the form of a single piece, the lateral edges (5) being extended downwards so as to form two rear conduits (6) intended to receive at least one rear movement member (26, 27, 28; 34, 35, 36; 58, 59, 40), **characterized in that** the lateral edges (5), by extending downwards so as to form the two rear conduits (6), form flat outer lateral surfaces, the seat including ears (44) extending heightwise and on the sides, and formed on a lower platform (14) of the seat and against the flat outer lateral surfaces, the ears each comprising a conduit (45) for an accessory oriented from front to back done at a particular level such that the upper portion thereof is at the same level as the lower portion of the rear conduits (6) and **in that** the seat, which is hollow, is adapted to receive a device for heating a thermoformable component polymer of the seat so as to produce a seat adapted to each user.

2. The vehicle (1) according to claim 1, **characterized in that** the seat portion comprises a front support surface (8) extended by a rear support surface (9) positioned at a lower level relative to the front support surface (8), said two support surfaces (8, 9) being attached to the lateral edges (5) by rounded surfaces (10), the lateral edges (5) having a particular height relative to one of the support surfaces of the seat portion so as to support the abductor muscles of the thighs and gluteus maximus muscles of the user.

3. The vehicle according to claim 1 or 2, **characterized in that** the seat portion (4) is attached to a lower portion (11) of the backrest (3), said lower portion (11) including a withdrawn surface relative to a support surface of an upper portion (12) of the backrest (3), the support surface of the upper portion (12) of the backrest (3) being positioned so as to support the lumbar region of the user, the withdrawn surface of the lower portion (11) being arranged so as to free the lumbar vertebrae and the sacrum of the user.

4. The vehicle according to one of claims 1 to 3, **characterized in that** the seat lower platform (14) includes two downwardly-oriented front conduits (22) intended to receive at least one front movement member (29, 42, 39), a rounded bumper partition (24) delimiting the lateral and front sides of the lower platform (14).

5. The vehicle according to claim 4, **characterized in that** the lower platform (14) comprises a recess formed by at least one footrest (15) for the user's feet completely surrounded by a peripheral rim (16) delimiting the recess.

6. The vehicle according to claim 5, **characterized in that** the edge delimiting the recess includes a rear portion (17) extended by a partition (18) joining a front edge (20, 21) of the seat portion, the front edge (20, 21) of the seat portion being positioned in front of the rear portion (17) of the edge (16) delimiting the recess.

7. The vehicle according to claim 6, **characterized in that** the front edge (20, 21) of the seat portion includes two backward curves (20) for positioning the user's legs, said two backward curves (20) being attached by a forwardly-curved middle portion (21), said middle portion also including a portion (49) protruding over the top, said protruding portion including two rounded concave portions for supporting the adductor muscles of the user's thighs.

8. The vehicle according to one of claims 4 to 7, **characterized in that** the vehicle comprises blind threaded housings (25) embedded in the seat, provided laterally relative to the seat portion (4), said threaded housings (25) being provided on either side of the back of the seat portion and being intended for the fastening of a belt or strap for holding the user's groin or abdominal muscles, or these housings being arranged on either side of the front of the seat portion (4) and being intended to fasten a belt or strap for holding the user's knees.

9. The vehicle according to any one of claims 4 to 8, **characterized in that** the rear movement member comprises two back wheels (26) and a bar (27) maintained in the rear conduits (6), said bar (27) being equipped at each of its ends with a member (28) for locking the translation of the bar and hinging one of the wheels, the lateral edges (5) having an upper profile along the contour of one of the wheels over a particular angular portion comprised between 15° and 75°, two front movement members each including at least one steerable front wheel (29).

10. The vehicle according to claim 9, **characterized in that** the back wheels (26) each comprise an outer rolling ring made from molded plastic, connected to said hinge member (28) by fins (30) bearing on the water narrowing in a junction portion with the outer rolling ring so as to leave an empty space opposite the guide shoe (50) of said wheel, the seat comprising, under the seat portion (4), a boss (31) in which an open hollow plug is made toward the front and a handle (32) made behind the backrest (3), a float (33) for stabilizing the vehicle in the water being attached to said handle (32) and the hollow plug.

11. The vehicle according to one of claims 4 to 8, **characterized in that** it comprises two rear movement members each comprising a snow ski (34) secured, by a rod (35), to a cylindrical portion (36) hinged in one of the rear conduits (6), said rod (35) being secured on the other hand to a branch (37) rising above the seat and ending with a handle (38) for steering said back ski (34), two front movement members each comprising at least one front snow ski (39).

12. The vehicle according to one of claims 4 to 8, **characterized in that** the rear movement member comprises two water skis (40), the front movement member comprising at least one front water ski from front to back (42), arranged under the vehicle in the middle.

13. A method for producing a vehicle according to one of claims 1 to 12, **characterized in that** the seat (2) is made to be hollow by rotational molding.

14. The method for manufacturing a vehicle according to claim 13, **characterized in that** one or more partition portions (43) of the seat are used to mark a raised inscription or drawing.
